# EUROPEAN PATENT APPLICATION

(11) **EP 1 440 847 A1**
(43) Date of publication of application: **28.07.2004**
(21) Application number: 03001502.8
(22) Date of filing: 23.01.2003
(51) Int. Cl.: B60R 9/10, B62H 3/02

(54) **Angle adjustable bicycle rack assembly**

(71) Applicant: Wang, Chiu-Kuei, YuanLi Town, MiaoLih Hsien (TW)
(72) Inventor: Wang, Chiu-Kuei, YuanLi Town, MiaoLih Hsien (TW)
(74) Representative: Robba, Pierpaolo

(57) **Abstract**

A bicycle rack assembly includes a base plate (10) on the vehicle and has a first connection tube (11) to which a second connection tube (21) extending from a vertical portion of a frame (20) is connected. A slot (111) is defined in a wall of the first connection tube and a plurality of positioning holes (211) are defined through a wall of the second connection tube so that a first bolt (22) extends through one of the positioning holes and is engaged with the slot. Two support plates (25) are connected to a horizontal portion of the frame and each support plate has a first groove (251). A cap (26) has two second grooves (261) defined in an underside thereof and is connected to the horizontal portion with the two second grooves located to match with the first grooves so as to clamp two respective top tubes of bicycles in the grooves. The frame (20) can be adjusted an angle relative to the base plate (10).

## Description

### FIELD OF THE INVENTION

The present invention relates to a bicycle rack assembly wherein the angle of the rack relative to the vehicle can be adjusted.

### BACKGROUND OF THE INVENTION

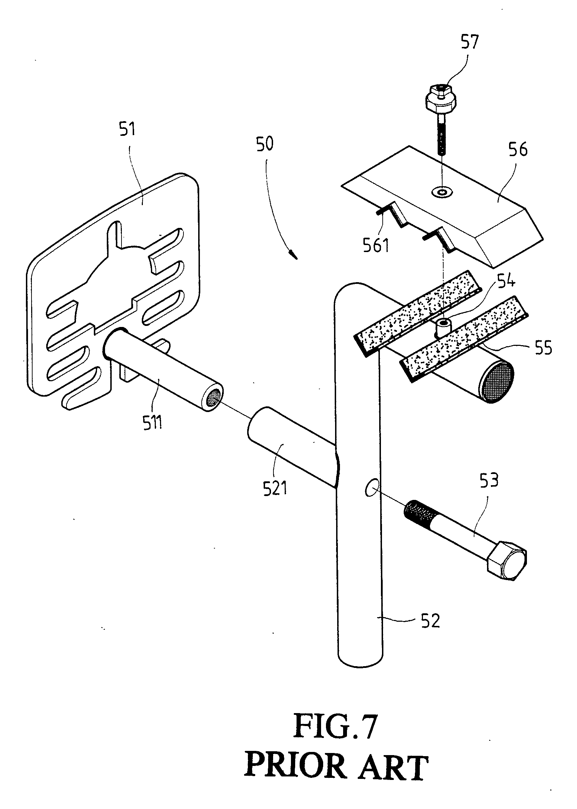

A conventional bicycle rack assembly for vehicle is shown in Fig. 7 and generally includes a base plate 51 fixed to a back of a vehicle and a first connection tube 511 extends from the base plate 51. A spare tire (not shown) is mounted to the first connection tube 511 and an L-shaped frame 52 is connected to the first connection tube 511 by receiving the first connection tube 511 in a second connection tube 521 extending from the frame 52. A bolt 53 extends through the frame 52 and the second connection tube 521 and is threadedly connected to the first connection tube 511. Two support plates 55 each have a groove is fixed to the frame 52 and a cap 56 with two grooves 561 is mounted to the frame 52 so that two top tubes (not shown) of two bicycles are respectively clamped in the two grooves cooperated by the support plates 55 and the grooves 561 of the cap 56. A locking bolt 57 extends through the cap 56 and is threadedly connected to a tube 54 extending from the frame 52. In order to clamp at the point of the center weight of the bicycle, the wheels of bicycles perhaps protrude out from one side of the vehicle and tangle objects such as trees or even pedestrians during riding traveling. This is an inherent shortcoming which needs to be improved.

The present invention intends to provide a bicycle rack assembly that has an angle adjusting device so as to adjust the position of the bicycle relative to the vehicle to improve the shortcoming mentioned above.

### SUMMARY OF THE INVENTION

In accordance with one aspect of the present invention, there is provided a bicycle rack assembly which comprises a base plate and a first connection tube extends from a side of the base plate and a slot is defined in a wall of the first connection tube. A frame includes a vertical portion and a horizontal portion, wherein a second connection tube extends from the vertical portion and rotatably mounted to the first connection tube. A plurality of positioning holes are defined through a wall of the second connection tube so that a first bolt extends through one of the positioning holes and is engaged with the slot. Two support plates are connected to the horizontal portion and each have a first groove defined therein. A cap has two second grooves defined in an underside thereof and the cap is connected to the horizontal portion. The two second grooves are located to match with the first grooves.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows a bicycle is carried on the bicycle rack assembly of the present invention on the rear end of a vehicle;
Fig. 2 is an exploded view to show bicycle rack assembly of the present invention;
Fig. 3 is a perspective view to show the bicycle rack assembly of the present invention;
Fig. 4 shows a top tube of a bicycle is clamped by the bicycle rack assembly of the present invention;
Fig. 5 shows an extension bar is cooperated with the bicycle rack assembly of the present invention when the bicycle has no top tube;
Fig. 6 shows the frame is inclined relative to a vertical plane, and
Fig. 7 is an exploded view to show a conventional bicycle rack assembly.

### DETAILED DESCRIPTION OF THE PREFERRED EMBODIMENT

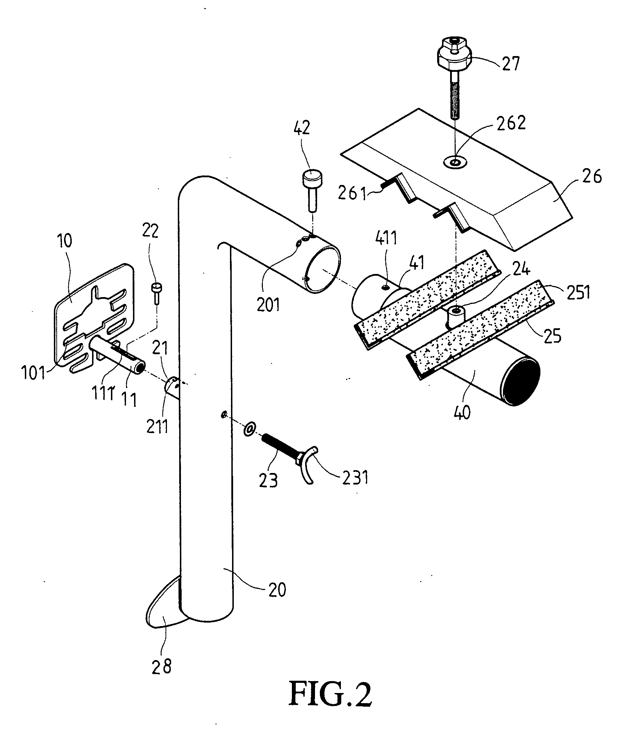

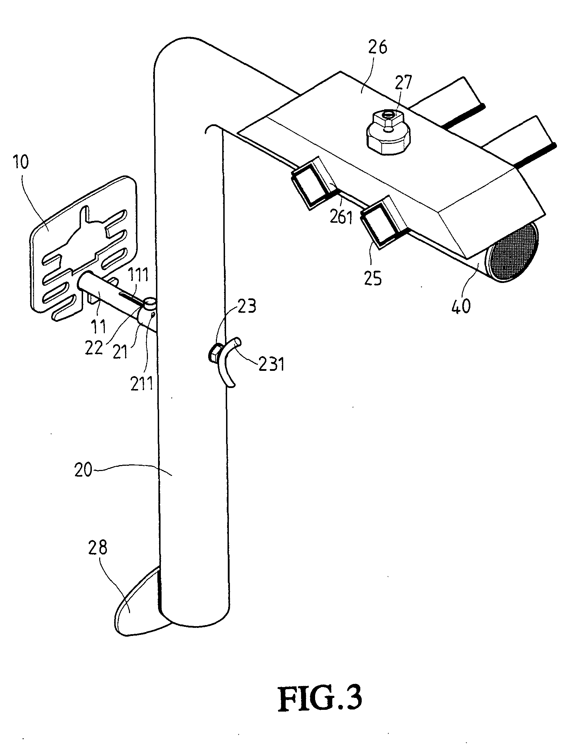

Referring to Figs. 2 to 4, the bicycle rack assembly of the present invention comprises a base plate 10 which is fixed to a rear end of a vehicle and includes a plurality of recesses 101 for locating the base plate 10 at different positions. A first connection tube 11 extends from a side of the base plate 10 and a slot 111 is defined in a wall of the first connection tube 11.

An L-shaped frame 20 includes a vertical portion and a horizontal portion 40. A second connection tube 21 extends from the vertical portion and is rotatably mounted to the first connection tube 11. A plurality of positioning holes 211 are defined through a wall of the second connection tube 21. A first bolt 22 extends through one of the positioning holes 211 and is engaged with the slot 111. A second bolt 23 having a handle 231 connected to an end of the second bolt 23 extends through the frame 20 and the second connection tube 21 and is threaded connected to the first connection tube 11. A pad 28 is connected to a first end of the vertical portion of the frame 20 so that the pad 28 provide a larger contact area with the spare tire such that the rack assembly can be positioned in a stable status.

The horizontal portion 40 has a neck 41 which is connected to a second end of the horizontal portion and a position hole 411 is defined through the neck 41. A plurality of adjusting holes 201 are defined through a wall of the second end of the horizontal portion. A third bolt 42 extends through one of the adjusting holes 201 and the position hole 411.

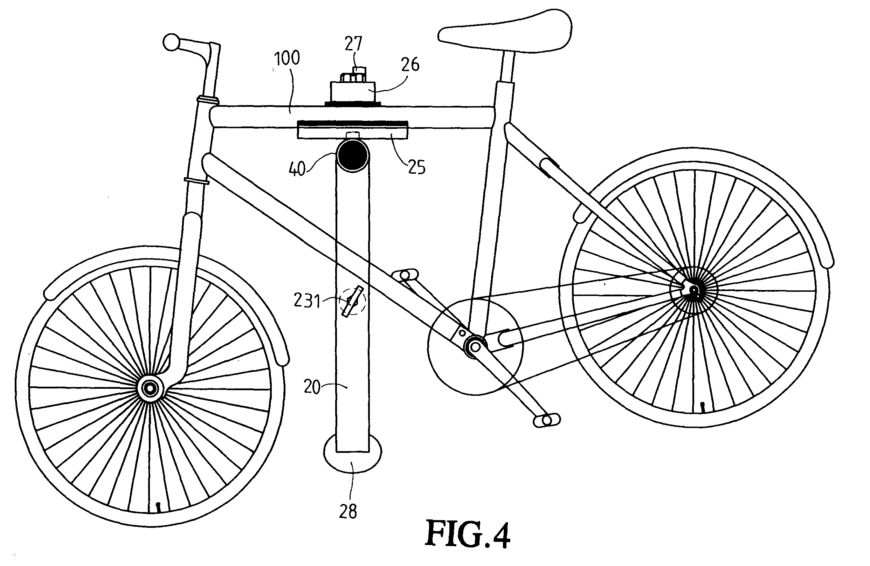

Two support plates 24 are connected to the horizontal portion 40 and each have a first groove 251 defined therein. A cap 26 has two second grooves 261 defined in an underside thereof and the cap 26 is connected to the horizontal portion 40 by using a bolt 27 extending through a hole 262 in the cap 26 and threadedly connected with the connection tube 24 extending from the horizontal portion 40. The two second grooves 261 are located to match with the first grooves 251 so that a top tube 100 as shown in Fig. 4 can be clamped in the cooperated first and second groove 251 and 261.

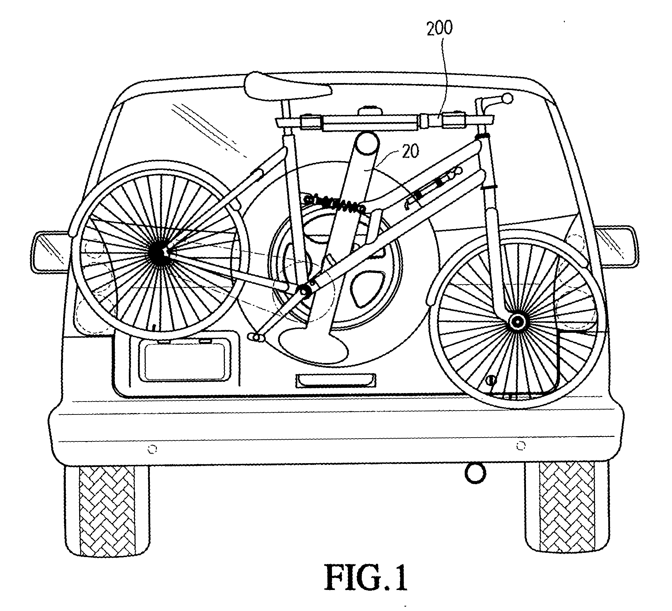

The vertical portion of the frame 20 can be adjusted relative to the base plate 10 by re-arranging the first bolt 22 with another positioning hole 211 and the slot 111 as shown in Fig. 1. The horizontal portion 40 can also be adjusted about the second end of the frame 20 when needed by inserting the third bolt 42 through another adjusting hole 201 and the position hole 411.

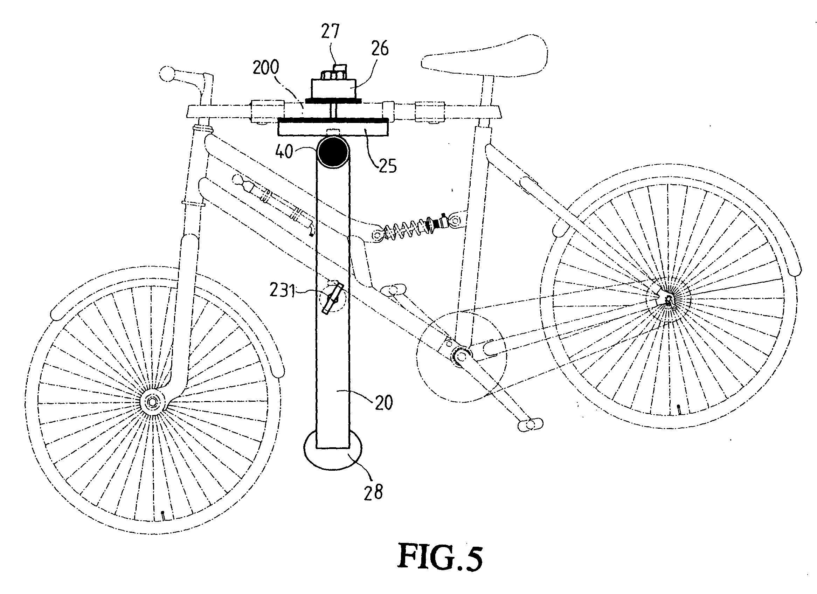

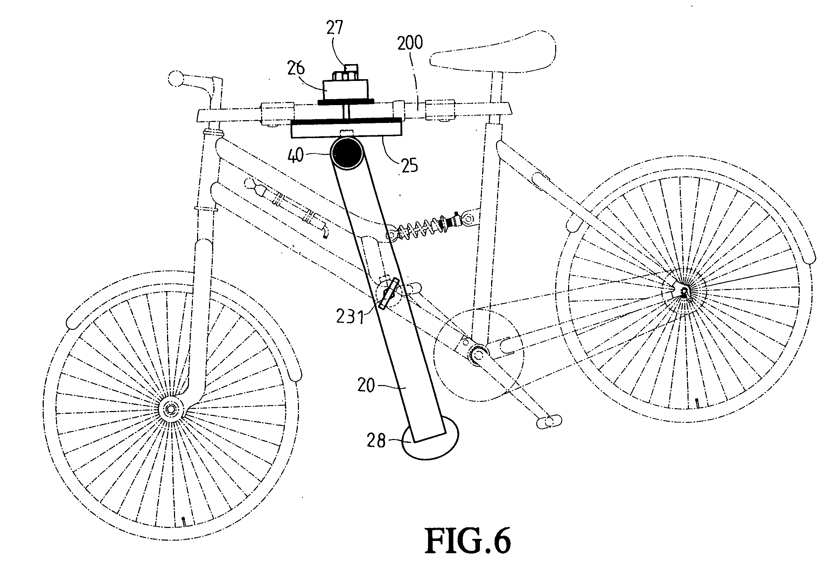

Referring to Figs. 5 and 6, when carrying a bicycle that has no top tube, an extension bar 200 is clamped by the cap 26 and the support plate 25 and includes two extendible ends which are respectively engaged with the seat post and the steerer tube.

While we have shown and described the embodiment in accordance with the present invention, it should be clear to those skilled in the art that further embodiments may be made without departing from the scope of the present invention.

## Claims

1. A bicycle rack assembly comprising:
a base plate and a first connection tube extending from a side of the base plate, a slot defined in a wall of the first connection tube;
a frame including a vertical portion and a horizontal portion, a second connection tube extending from the vertical portion and rotatably mounted to the first connection tube and a plurality of positioning holes defined through a wall of the second connection tube, a first bolt extending through one of the positioning holes and engaged with the slot, a second bolt extending through the frame and the second connection tube and threaded connected to the first connection tube;
two support plates connected to the horizontal portion and each having a first groove defined therein, and
a cap having two second grooves defined in an underside thereof and the cap connected to the horizontal portion, the two second grooves being located to match with the first grooves.

2. The assembly as claimed in claim 1, wherein the second bolt has a handle connected to an end of the second bolt.

3. The assembly as claimed in claim 1 further comprising a pad connected to a first end of the vertical portion of the frame.

4. The assembly as claimed in claim 1 wherein the horizontal portion has a neck which is connected to a second end of the horizontal portion, a position hole defined through the neck and a plurality of adjusting holes defined through a wall of the second end of the horizontal portion, a third bolt extending through one of the adjusting holes and the position hole.
